# EUROPEAN PATENT APPLICATION

(11) **EP 4 844 884 A1**
(43) Date of publication of application: **25.11.2026**
(21) Application number: 25873700.6
(22) Date of filing: 01.09.2025
(51) Int. Cl.: H01M 10/42, H01M 10/48, H02J 7/00, B60L 58/16

(54) **BATTERY MANAGEMENT SYSTEM AND BATTERY MANAGEMENT METHOD**

(30) Priority: 24.09.2024 KR 20240128993; 27.08.2025 KR 20250120422
(71) Applicant: LG Energy Solution, Ltd., Seoul 07335 (KR)
(72) Inventor: LEE, Bum-Hee, Daejeon 34122 (KR)
(74) Representative: Plasseraud IP
(86) International application number: PCT/KR2025/013373
(87) International publication number: WO 2026/071523

(57) **Abstract**

A battery management system and a battery management method are provided. The battery management system according to the present invention comprises: a sensing unit for generating battery monitoring information indicating individual states of a plurality of battery blocks; a switching unit for changing electrical connection states between the plurality of battery blocks; and a control unit for controlling the switching unit on the basis of the battery monitoring information.

## Description

### TECHNICAL FIELD

The present disclosure relates to protection of a battery pack including a plurality of battery blocks from thermal propagation hazards.

This application is based on and claims priority from Korean Patent Application No. 10-2024-0128993 filed on September 24, 2024 and Korean Patent Application No. 10-2025-0120422 filed on August 27, 2025 with the Korean Intellectual Property Office, the disclosures of which are incorporated herein in its entirety by reference.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and energy density is high.

A battery pack for a battery system (for example, an electric vehicle or an energy storage system) requiring large capacity and high voltage may include a few to a few hundred battery blocks connected either in series or in parallel, or both.

The close-packed structure of the battery blocks within the limited space of the battery pack is beneficial for high energy density, but abnormal conditions of some battery blocks easily have negative impacts on the remaining battery blocks. Typically, when thermal runaway occurs in a specific battery block due to overheating or an internal circuit short, the rapid spread of the thermal runaway to adjacent battery blocks, so-called 'thermal propagation' may occur.

### DISCLOSURE

### Technical Problem

The present disclosure is designed to solve the above-described problems, and therefore the present disclosure is directed to providing an apparatus and method that monitors the condition of each of a plurality of battery blocks included in a battery pack, and changes an electrical connection state between the plurality of battery blocks to electrically separate at least one battery block having abnormal condition from the remaining battery block.

The present disclosure is further directed to providing an apparatus and method that determines the battery block to be separated from charging/discharging terminals using differential criteria that rely on the usage intensity of the battery pack.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

A battery management system according to an aspect of the present disclosure includes a sensing unit to generate battery monitoring information indicating a state of each of a plurality of battery blocks, a switching unit to change an electrical connection state between the plurality of battery blocks, and a control unit to control the switching unit based on the battery monitoring information.

The control unit may diagnose a thermal runaway hazard of each of the plurality of battery blocks based on the battery monitoring information. The control unit may control the switching unit according to a result of the thermal runaway hazard diagnosis.

The control unit may classify each of the plurality of battery blocks into a first group or a second group based on the diagnosis result.

The control unit may control the switching unit to electrically separate each battery block in the first group from each battery block in the second group.

The switching unit may electrically separate each battery block in the first group from charging/discharging terminals. The switching unit may electrically connect each battery block in the second group to the charging/discharging terminals.

The control unit may differentially change a grouping criterion for the plurality of battery blocks according to a usage intensity of the battery pack.

The control unit may classify, into the first group, each abnormal battery block, which is a battery block having the thermal runaway hazard among the plurality of battery blocks, when the usage intensity of the battery pack is equal to or more than an upper limit of a predetermined intensity range.

The control unit may classify, into the first group, each adjacent battery block, which is a battery block adjacent to an abnormal battery block among the plurality of battery blocks, when the usage intensity of the battery pack is within a predetermined intensity range.

The control unit may classify, into the first group, each degraded battery block, which is a battery block having a state of health (SOH) less than a threshold value among the plurality of battery blocks, when the usage intensity of the battery pack is equal to or less than a lower limit of a predetermined intensity range.

A battery pack according to another aspect of the present disclosure includes the battery management system.

An electric vehicle according to still another aspect of the present disclosure includes the battery pack.

A battery management method according to further another aspect of the present disclosure includes obtaining battery monitoring information indicating a state of each of a plurality of battery blocks, and controlling a switching unit to change an electrical connection path between the plurality of battery blocks based on the battery monitoring information.

Controlling the switching unit may include diagnosing a thermal runaway hazard of each of the plurality of battery blocks based on the battery monitoring information, and controlling the switching unit according to a result of the thermal runaway hazard diagnosis.

Controlling the switching unit may further include classifying each of the plurality of battery blocks into a first group or a second group based on the diagnosis result.

Controlling the switching unit may further include controlling the switching unit to electrically separate each battery block in the first group from each battery block in the second group.

A computer-readable medium according to yet another aspect of the present has recorded thereon a program for causing a computer to perform the battery management method.

### Advantageous Effects

According to at least one of the embodiments of the present disclosure, the condition of each of the plurality of battery blocks included in the battery pack may be monitored and the electrical connection state between the plurality of battery blocks may be changed. Accordingly, at least one battery block having abnormal condition may be electrically separated from the remaining battery block, thereby reducing the negative impacts of the abnormal condition (thermal runaway hazards) of the certain battery block on the remaining battery block.

Furthermore, the present disclosure may determine the battery block to be electrically separated from the charging/discharging terminals using the differential criteria that rely on the usage intensity of the battery pack. Accordingly, it may be possible to reduce the risk that accidents will occur due to sudden electrical disconnection of the battery blocks from the charging/discharging terminals (for example, an unintended cessation of an electric vehicle due to a sudden drop/loss of power supplied from the battery pack), and facilitate an emergency operation (for example, temporary driving of an electric vehicle to move to a safety area) of the battery system including the battery pack.

The effects of the present disclosure are not limited to the mentioned effects, and these and other effects will be clearly understood by those skilled in the art from the description of the claims.

### BRIEF DESCRIPTION OF THE DRAWINGS

The accompanying drawings illustrate the exemplary embodiments of the present disclosure and together with the following detailed description, serve to provide a better understanding of the technical aspects of the present disclosure, and thus the present disclosure should not be constructed as being limited to the drawings.
FIG. 1 is a diagram schematically showing a configuration of an electric vehicle including a battery management system according to an embodiment of the present disclosure.
FIG. 2 is a diagram referenced in describing an example of a connection relationship between a battery block and a sensing unit shown in FIG. 1.
FIG. 3 is a diagram referenced in describing an example of a connection relationship between a battery block and a switching unit shown in FIG. 1.
FIG. 4 is a diagram referenced in describing an exemplary configuration of a switching circuit shown in FIG. 3.
FIG. 5 is a diagram referenced in describing an example of a connection relationship between a battery block and a discharging unit shown in FIG. 1.
FIG. 6 is a diagram referenced in describing another example of a connection relationship between a battery block and a discharging unit shown in FIG. 1.
FIG. 7 is a flowchart referenced in briefly describing a battery management method according to another embodiment of the present disclosure.
FIG. 8 is a flowchart referenced in briefly describing an example of a set of routines that may be included in step S720 of FIG. 7.
FIG. 9 is a flowchart referenced in briefly describing another example of a set of routines that may be included in step S720 of FIG. 7.
FIG. 10 is a flowchart referenced in briefly describing an example of a set of routines that may be included in step S920 of FIG. 9.
FIGS. 11 to 14 are diagrams referenced in describing a differential grouping procedure related to the method of FIG. 10.
FIG. 15 is a flowchart referenced in briefly describing an example of a set of routines that may be included in step S820 of FIG. 8.
FIGS. 16 and 17 show exemplary data tables referenced in describing the method of FIG. 15.

### BEST MODE

Hereafter, the exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, but not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

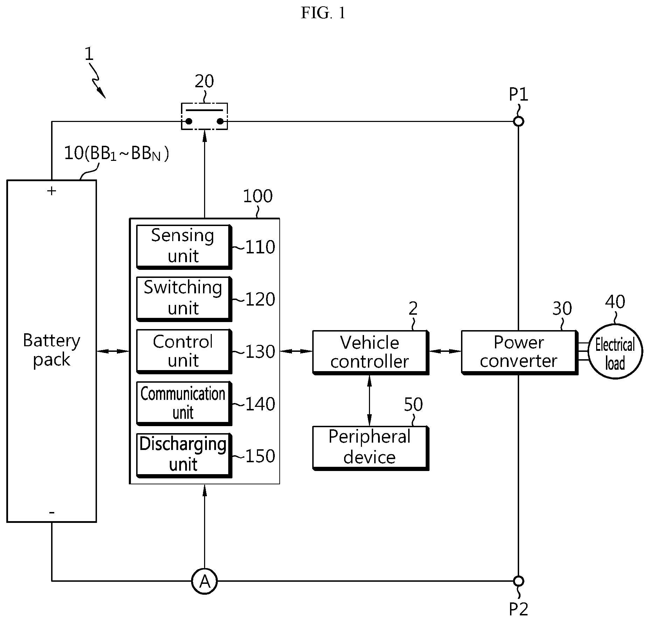

FIG. 1 is a diagram schematically showing a configuration of an electric vehicle including a battery management system according to an embodiment of the present disclosure.

Referring to FIG. 1, the electric vehicle 1 may include a battery pack 10, the battery management system 100, a relay 20, a vehicle controller 2, a power converter 30 and an electrical load 40. The electric vehicle 1 may further include a peripheral device 50.

The battery pack 10 includes a plurality of battery blocks BB₁~BB_{N} (N is a natural number of 2 or greater), a first charging/discharging terminal P1 and a second charging/discharging terminal P_{2.}

In this specification, in the description that is shared between the plurality of battery blocks BB₁~BB_{N,} the symbol 'BB' or 'BBₖ' is affixed to the battery block. k is a natural number that is equal to or smaller than N.

The plurality of battery blocks BB₁~BB_{N} may be connected between the first charging/discharging terminal P1 and the second charging/discharging terminal P₂ either in series or in parallel or both.

The battery block BB may include one battery module, or two or more battery modules. When the battery block BB includes the plurality of battery modules, the plurality of battery modules may be connected either in series or in parallel, or both.

Each battery module may include one battery cell or an assembly of two or more battery cells. When the battery module includes the plurality of battery cells, the plurality of battery cells may be connected either in series or in parallel, or both. In this specification, the battery cell refers to a basic unit of an electricity storage device capable of charging and discharging on its own, and is not limited to a particular one and may include, for example, any rechargeable battery cell such as a lithium-ion cell.

The relay 20 is installed on a power line connecting the battery pack 10 to the charging/discharging terminals P1, P2. FIG. 1 shows that the relay 20 is connected between a positive terminal of the battery pack 10 and the charging/discharging terminal P1, but the electric vehicle 1 may further include an additional relay 20 connected between a negative terminal of the battery pack 10 and the charging/discharging terminal P2. The on/off control of the relay 20 is performed in response to a switching signal from the battery management system 100 or the vehicle controller. According to an embodiment of the present disclosure, the relay 20 may be a mechanical contactor that is turned on/off by the magnetic force of a coil, or a semiconductor switch such as a Metal Oxide Semiconductor Field Effect transistor (MOSFET).

The battery management system 100 includes a control unit 130. The battery management system 100 may further include at least one of a sensing unit 110, a switching unit 120, a communication unit 140 or a discharging unit 150. At least one of the sensing unit 110, the switching unit 120, the communication unit 140 or the discharging unit 150 may be provided as the component of the battery pack 10, instead of the component of the battery management system 100.

The sensing unit 110 generates battery monitoring information indicating the state of each of the plurality of battery blocks BB₁~BB_{N} of the battery pack 10.

The sensing unit 110 may periodically or aperiodically measure at least one state parameter of each of the plurality of battery blocks BB₁~BB_{N,} and provide the battery monitoring information indicating each of the measured state parameters to the control unit 130.

The state parameter of the battery block BBₖ may indicate a temperature of the battery block BBₖ (referred to as 'block temperature'), a cell voltage of each battery cell BC included in the battery block BB, or a secondary parameter (for example, an amount of change, a change ratio) that may be found by applying a mathematical function. Besides, the state parameter is not limited to a particular type and may include any type of state parameter that directly or indirectly indicates the level of thermal abnormal state of the battery block BBₖ.

A current sensor A is installed on the power line connecting the battery pack 10 to the charging/discharging terminals P1, P2 to measure the current flowing through the battery pack 10. The current sensor A may be included in the sensing unit 110.

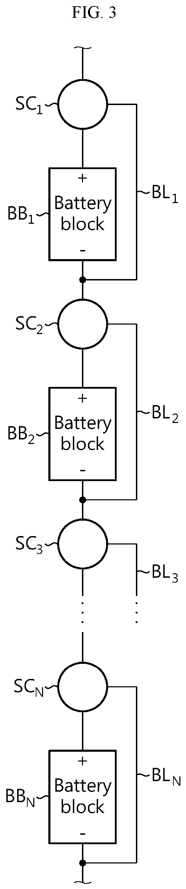

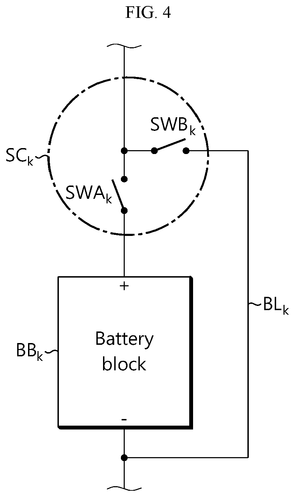

The switching unit 120 is provided to change the electrical connection path between the plurality of battery blocks BB₁~BB_{N}. The switching unit 120 will be described with reference to FIGS. 3 and 4 below.

The discharging unit 150 is connected to the plurality of battery blocks BB₁~BB_{N}. The discharging unit 150 performs an energy consumption operation (i.e., forced discharge) for each of the plurality of battery blocks BB₁~BB_{N} in response to a control signal from the control unit.

The control unit 130 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, or electrical units for performing other functions.

The control unit 130 is operably coupled to at least one of the switching unit 120, the sensing unit 110, the communication unit 140 or the discharging unit 150. In this instance, operably coupled refers to connection to enable signal transmission and reception in one or two directions.

The control unit 130 may have a memory device. The memory device may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory device may store data and programs required for the operation by the control unit 130. The memory device may store data indicating the result of the operation by the control unit 130.

The control unit 220 may include one or more memory devices and one or more processors, and may be referred to as a 'battery controller', and manufactured, used and/or sold as a standalone device.

The control unit 130 determines whether each of the plurality of battery blocks BB₁~BB_{N} is abnormal based on the state data received from the sensing unit 110. When at least one of the plurality of battery blocks BB₁~BB_{N} is diagnosed as abnormal, the control unit 130 may be configured to perform at least one safety operation for the battery pack 10.

As an example, the safety operation may include an operation of electrically separating at least one of the plurality of battery blocks BB₁~BB_{N} from the remaining battery block. As another example, the safety operation may include an operation of forcibly draining energy of at least one of the plurality of battery blocks BB₁~BB_{N} (referred to as 'energy drain').

The power converter 30 may include at least one of a DC-AC inverter or a DC-DC converter. The power converter 30 may convert the direct current power (discharge power) supplied from the battery pack 10 into alternating current power and supply it to the electrical load 40 during discharging of the battery pack 10. The electrical load 40 may include a three-phase alternating current motor that generates kinetic energy for driving the electric vehicle 1.

The control unit 130 may determine the state of charge (SOC) of each of the plurality of battery blocks BB₁~BB_{N} based on the battery monitoring information, and further determine the state of health (SOH).

The SOC of the battery block BB is the ratio of the remaining capacity of the battery block to its maximum capacity (Full Charge Capacity (FCC)), and is usually represented in a range of 0 to 100% or 0 to 1. The remaining capacity indicates the amount of charge currently stored in the battery block BB.

The SOH of the battery block BB is the ratio of the maximum capacity of the battery block BB to its design capacity, and is usually represented in a range of 0 to 100% or 0 to 1. The design capacity indicates the maximum amount of charge the battery block BB can store when it was new. As the battery block BB degrades, the maximum capacity gradually decreases from the design capacity. Each of the SOC and SOH may be estimated from any one of known techniques or a combination of two or more thereof, and its detailed description is omitted.

The communication unit 140 includes at least one communication circuit to support wired or wireless communication between the control unit 130 and the vehicle controller 2 and/or the peripheral device 50. The wired communication may be, for example, controller area network (CAN) communication, and the wireless communication may be, for example, Zigbee or Bluetooth communication. The communication protocol is not limited to the above-listed examples and may include any type of communication protocol that supports wired or wireless communication.

The peripheral device 50 may include vehicle sensor(s) to measure at least one parameter (for example, vehicle speed) related to the state of the electric vehicle 1. The peripheral device 50 may include an output device (for example, a display or a speaker) to provide the information received from the control unit 130 and/or the vehicle controller 2 in a recognizable format. The peripheral device 50 may operate using the direct or alternating current power supplied from the power converter 30.

Although FIG. 1 shows that the battery pack 10 and the battery management system 100 are physically independent from each other, the battery management system 100 may be included as the component of the battery pack 10.

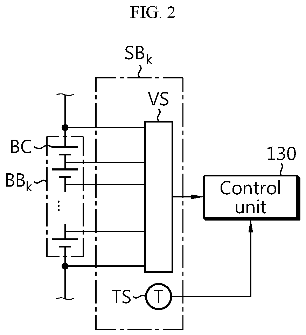

FIG. 2 is a diagram referenced in describing an example of a connection relationship between the battery block and the sensing unit shown in FIG. 1. For convenience of description, FIG. 2 shows only the battery block BBₖ of the plurality of battery blocks BB₁~BB_{N} included in the battery pack 10.

Referring to FIG. 2, the sensing unit 110 includes a sensing circuit SBₖ provided to the battery block BBₖ. Accordingly, those skilled in the art will readily understand that the sensing unit 110 may include a plurality of sensing circuits SB₁~SB_{N.}

The sensing circuit SBₖ may include a temperature sensor TS and further include a voltage detection circuit VS.

The temperature sensor TS is attached to the outer surface of the battery block BBₖ or installed at a predetermined location away from the battery block BBₖ to measure the temperature of the battery block BBₖ (i.e., the block temperature). The temperature sensor TS may generate a temperature signal indicating the temperature of the battery block BBₖ, and the control unit 130 may collect the temperature signal of the temperature sensor TS.

The voltage detection circuit VS includes at least one voltage sensor. The voltage detection circuit VS may measure a block voltage of the battery block BBₖ. The block voltage is a voltage across the battery block BBₖ. The voltage detection circuit VS may further measure a cell voltage of each battery cell BC included in the battery block BBₖ. The cell voltage is a voltage across the battery cell BC. The voltage detection circuit VS may generate a voltage signal indicating the block voltage of the battery block BBₖ and the cell voltage of the battery cell BC, and the control unit 130 may collect the voltage signal of the voltage detection circuit VS.

FIG. 3 is a diagram referenced in describing an example of a connection relationship between the battery block and the switching unit shown in FIG. 1, and FIG. 4 is a diagram referenced in describing an exemplary configuration of a switching circuit shown in FIG. 3.

Referring to FIGS. 3 and 4, the switching unit 120 may include a plurality of switching circuits SC₁~SC_{N} and further include a plurality of bypass lines BL₁~BL_{N.}

The switching circuit SCₖ is provided to electrically connect the battery block BBₖ to the power path between the charging/discharging terminals P1, P2, or electrically separate the battery block BBₖ from the power path between the charging/discharging terminals P1, P2.

The switching circuit SCₖ may include a switch SWAₖ and a switch SWBₖ.

The switch SWAₖ may be installed on the power path connecting a second terminal (for example, a negative terminal) of the battery block BBₖ₋₁ to a first terminal (for example, a positive terminal) of the battery block BBₖ. The first terminal of the battery block BBₖ may be any one of plus terminal and minus terminal of the battery block BBₖ, and the second terminal of the battery block BBₖ may be the other of plus terminal and minus terminal of the battery block BBₖ.

The switch SWBₖ may be installed on the bypass path BLₖ connecting the second terminal of the battery block BBₖ₋₁ to the second terminal of the battery block BBₖ.

While any one of the switch SWAₖ and the switch SWBₖ is turned on, turn-on of the other switch may be prohibited. The switching circuit SCₖ may be controlled into a first state or a second state.

When the battery block BBₖ is classified into a first group, the control unit 130 may control the switching circuit SCₖ into the first state.

When the battery block BBₖ is classified into a second group, the control unit 130 may control the switching circuit SCₖ into the second state.

The switching circuit SCₖ in the first state may represent that the switch SWAₖ is turned off and the switch SWBₖ is turned on. The switching circuit SCₖ in the second state may represent that the switch SWAₖ is turned on and the switch SWBₖ is turned off.

When the switch SWAₖ is turned on, the battery block BBₖ can be electrically connected to the charging/discharging terminals P1, P2. When the switch SWAₖ is turned off, the battery block BBₖ is electrically separated from the charging/discharging terminals P1, P2.

When the switch SWBₖ is turned on, the charge/discharge current of the battery pack 10 may flow through the bypass path BLₖ instead of the battery block BBₖ.

Each battery block classified into the first group may be electrically connected to the charging/discharging terminals P1, P2 by each switching circuit in the first state among the plurality of switching circuits SC₁~SC_{N}.

Each battery block classified into the second group may be electrically separated from each battery block classified into the first group by each switching circuit in the second state among the plurality of switching circuits SC₁~SC_{N}.

Each switch included in the switching unit 120 may be connected to the control unit 130 via a signal line. The switch may include any known switching device such as, for example, a field effect transistor (FET).

The description of the switching unit 120 made with reference to FIGS. 3 and 4 relates to an embodiment in which the switching unit 120 forms a series circuit of at least two of the plurality of battery blocks BB₁~BB_{N} to establish electrical connection between the charging/discharging terminals P1, P2.

Alternatively, the switching unit 120 may be configured to form a parallel circuit of at least two of the plurality of battery blocks BB₁~BB_{N} to establish electrical connection between the charging/discharging terminals P1, P2. In this case, the switching unit 120 may include at least one of the switch connected between the first terminal of the battery block BBₖ and the charging/discharging terminal P1 or the switch connected between the second terminal of the battery block BBₖ and the charging/discharging terminal P2. In addition, at least one of the plurality of bypass lines BL₁~BL_{N} shown in FIG. 3 may be omitted from the switching unit 120.

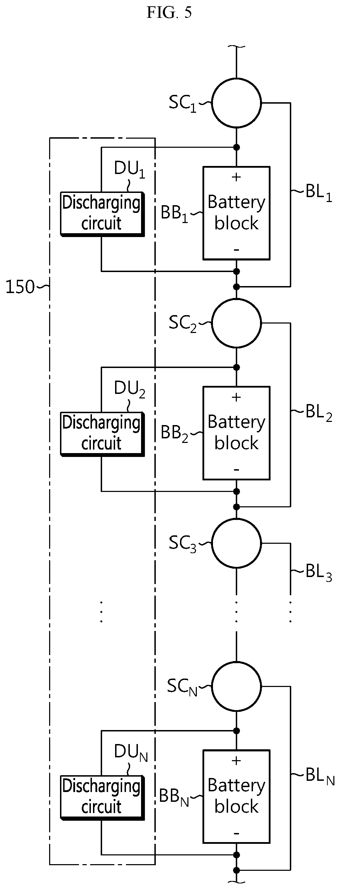

FIG. 5 is a diagram referenced in describing an example of a connection relationship between the battery block and the discharging unit shown in FIG. 1. To help understanding, FIG. 5 shows the battery block BBₖ and the sensing circuit SBₖ shown in FIG. 3 with an addition of the discharging unit 150.

Referring to FIG. 5, the discharging unit 150 may include a plurality of discharging circuits DU₁~DU_{N} provided respectively to the plurality of battery blocks BB₁~BB_{N}.

The discharging circuit DUₖ may be electrically connected in parallel to the battery block BBₖ.

When the battery block BBₖ is identified as an abnormal battery block having thermal runaway hazard, the control unit 130 may activate the discharging circuit DUₖ. Specifically, the control unit 130 may control the switching circuit SCₖ into the first state and activate the discharging circuit DUₖ, and thus the battery block BBₖ may be discharged by the discharging circuit DUₖ. The discharging circuit DUₖ may include a series circuit of a discharging load (for example, a resistor, a cooler) and the switch. In this case, activating the discharging circuit DUₖ may represent turning on the switch of the discharging circuit DUₖ.

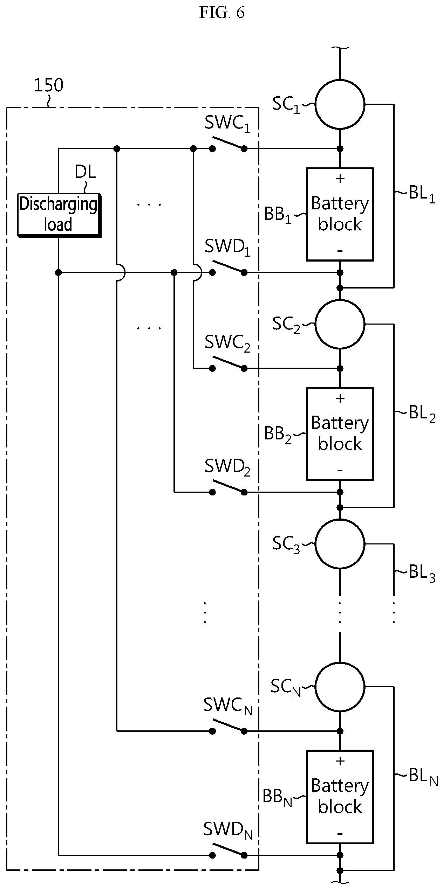

FIG. 6 is a diagram referenced in describing another example of a connection relationship between the battery block and the discharging unit shown in FIG. 1. To help understanding, FIG. 6 shows the battery block BBₖ and the sensing circuit SBₖ shown in FIG. 3 with an addition of the discharging unit 150.

Referring to FIG. 6, the discharging unit 150 may include the discharging load DL, the plurality of switches SWC₁~SWC_{N} and the plurality of switches SWD₁~SWD_{N}.

The discharging load DL may include, for example, a resistor and/or a cooler.

The switch SWCₖ may be connected between the first terminal of the battery block BBₖ and one end of the discharging load DL. The switch SWDₖ may be connected between the second terminal of the battery block BBₖ and the other end of the discharging load DL. That is, the discharging load DL may be connected in parallel to the battery block BBₖ through the pair of switches SWCₖ, SWDₖ.

When the two switches SWC_{k,} SWDₖ are turned on, the battery block BBₖ is discharged by the discharging load DL. When at least one of the two switches SWC_{k,} SWDₖ is turned off, the discharging of the battery block BBₖ by the discharging load DL is impossible.

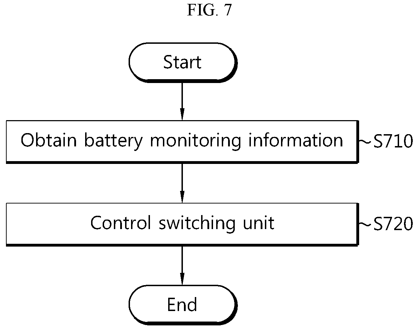

FIG. 7 is a flowchart referenced in briefly describing a battery management method according to another embodiment of the present disclosure. The method according to FIG. 7 may be periodically or aperiodically performed in a repeated manner.

Referring to FIG. 7, in step S710, the control unit 130 obtains the battery monitoring information indicating the state of each of the plurality of battery blocks BB₁~BB_{N} from the sensing unit 110.

In step S720, the control unit 130 controls the switching unit 120 provided to change the electrical connection path between the plurality of battery blocks BB₁~BB_{N} based on the battery monitoring information.

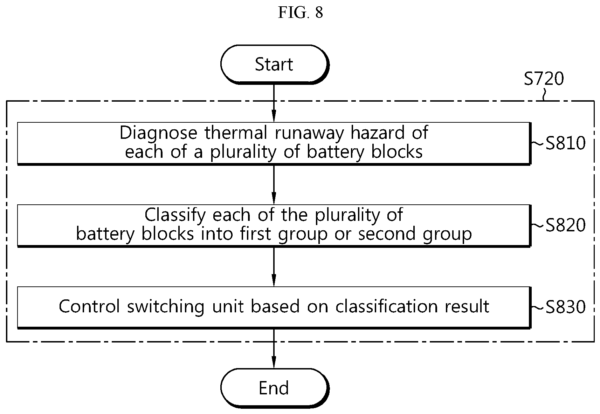

FIG. 8 is a flowchart referenced in briefly describing an example of a set of routines that may be included in the step S720 of FIG. 7.

Referring to FIG. 8, in step S810, the control unit 130 diagnoses thermal runaway hazard of each of the plurality of battery blocks based on the battery monitoring information.

The control unit 130 may compare a measurement value of at least one state parameter of the battery block BBₖ with a reference range (or a reference value). For example, when the state parameter is 'temperature (block temperature)', the reference range may represent a predetermined normal temperature range. When the state parameter of the battery block BBₖ is outside of the reference range, the battery block BBₖ may be diagnosed as having thermal runaway hazard, and otherwise, the battery block BBₖ may be diagnosed as having no thermal runaway hazard.

In step S820, the control unit 130 classifies each of the plurality of battery blocks BB₁~BB_{N} into the first group or the second group based on the result of the diagnosis performed in the step S810. For example, each battery block having thermal runaway hazard (referred to as 'abnormal battery block') may be classified into the first group, and each battery block having no thermal runaway hazard may be classified into the second group.

Each battery block in the first group may be prohibited from being used as a discharge power source for the electric vehicle 1. In contrast, each battery block in the second group may be permitted to be used as a discharge power source for the electric vehicle 1.

The control unit 130 may separately record identification information of each battery block classified into the first group and identification information of each battery block classified into the second group in the memory device. Each of the plurality of battery blocks BB₁~BB_{N} may be fixedly positioned in different physical areas within the battery pack 10, and the identification information of the battery block may correspond to the physical area (for example, an address) within the battery pack 10 where the battery block is positioned.

In step S830, the control unit 130 controls the switching unit 120 based on the result of the classification in the step S820.

The switching unit 120 may electrically separate each battery block in the first group from each battery block in the second group. The switching unit 120 may electrically connect each battery block in the second group to the charging/discharging terminals. As a result, each battery block in the first group may be electrically separated from the charging/discharging terminals P+, P-.

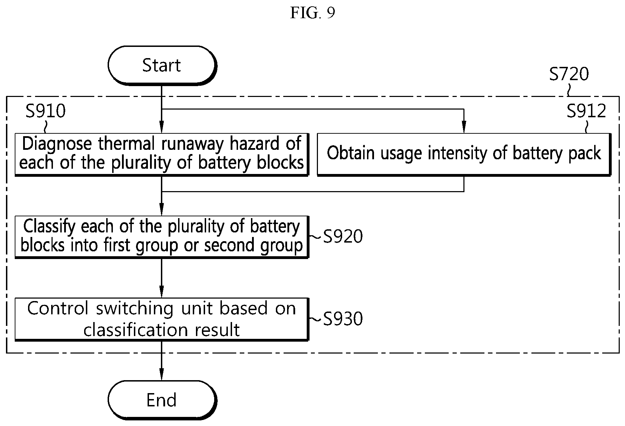

FIG. 9 is a flowchart schematically illustrating another example of a set of routines that may be included in the step S720 of FIG. 7. For convenience of description, in describing the method of FIG. 9, the description shared in common with the description made with reference to FIG. 8 is omitted, and the following description will be made based on differences from the method according to FIG. 8.

Referring to FIG. 9, in step S910, the control unit 130 diagnoses thermal runaway hazard of each of the plurality of battery blocks BB₁~BB_{N} based on the battery monitoring information. The step S910 may be substantially the same as the step S810.

In step S912, the control unit 130 obtains usage intensity of the battery pack 10. The usage intensity of the battery pack 10 may be a value that directly or indirectly indicates the required discharge level of the battery pack 10 by the electric vehicle 1. For example, the usage intensity of the battery pack 10 may include the speed of the electric vehicle 1 or the discharge current or discharge power of the battery pack 10. The usage intensity of the battery pack 10 may be notified to the control unit 130 in real time via communication between the communication unit 140 and the vehicle controller 2.

In step S920, the control unit 130 classifies each of the plurality of battery blocks BB₁~BB_{N} into the first group or the second group based on the result of the diagnosis performed in the step S910 and the usage intensity of the battery pack 10 obtained in the step S912.

In step S930, the control unit 130 controls the switching unit 120 based on the result of the classification in the step S920.

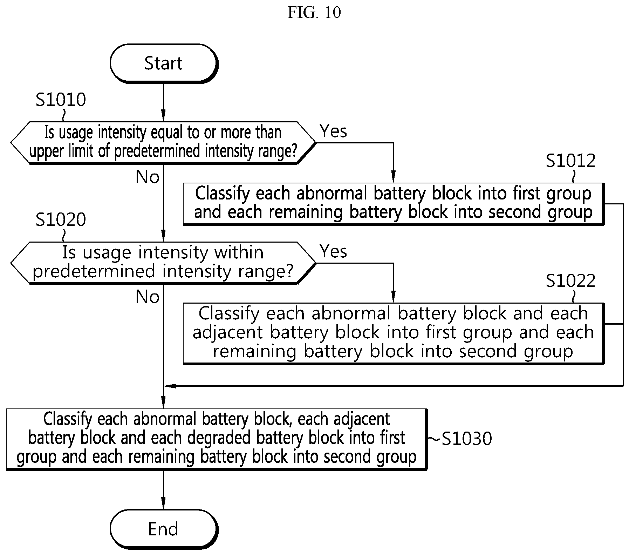

FIG. 10 is a flowchart referenced in briefly describing an example of a set of routines that may be included in the step S920 of FIG. 9.

Referring to FIG. 10, in step S1010, the control unit 130 determines whether the usage intensity of the battery pack 10 is equal to or more than the upper limit of a predetermined intensity range. The predetermined intensity range may be a range between a first intensity and a second intensity (less than the first intensity). When a value of the step S1010 is "Yes", step S1012 may be performed. For example, when the speed of the electric vehicle 1 is higher than 60 km/h, the control unit 130 may process the usage intensity of the battery pack 10 as being more than the first intensity. When the value of the step S1010 is "No", step S1020 may be performed.

In step S1012, in the similar way to the step S820, the control unit 130 may classify each abnormal battery block having thermal runaway hazard into the first group and each remaining battery block into the second group. The abnormal battery block may refer to a battery block that has been identified as having thermal runaway hazard.

In step S1020, the control unit 130 determines whether the usage intensity of the battery pack 10 is within the predetermined intensity range. As an example, when the speed of the electric vehicle 1 is higher than 20 km/h and equal to or lower than 60 km/h, the control unit 130 may process the usage intensity of the battery pack 10 as being equal to or less than the first intensity and more than the second intensity. As another example, when the speed of the electric vehicle 1 is equal to or lower than 20 km/h, the control unit 130 may process the usage intensity of the battery pack 10 as being equal to or less than the second intensity. The degraded battery block may refer to a battery block having SOH less than a threshold value. When a value of the step S1020 is "Yes", step S1022 may be performed. The value of the step S1020 being "No" may indicate that the usage intensity of the battery pack 10 is equal to or less than the lower limit of the predetermined intensity range. When the value of the step S1020 is "No", step S1030 may be performed.

In the step S1022, the control unit 130 may classify each abnormal battery block and each adjacent battery block into the first group and each remaining battery block into the second group. The adjacent battery block may refer to a normal battery block adjacent to the abnormal battery block.

The execution of the step S1030 may represent that the usage intensity of the battery pack 10 is equal to or less than the second intensity. In the step S1030, the control unit 130 may classify each abnormal battery block, each adjacent battery block and each degraded battery block into the first group and each remaining battery block into the second group.

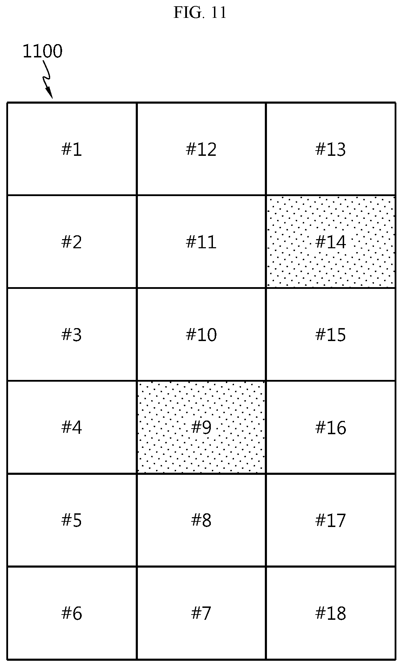

FIGS. 11 to 14 are diagrams referenced in describing a differential grouping procedure related to the method of FIG. 10.

Referring to FIG. 11, a layout 1100 of the battery pack 10 is shown in a 6X3 matrix. It is assumed that 18 grids #1~#18 of the layout 1100 correspond to the plurality of battery blocks BB₁~BB₁₈ included in the battery pack 10, respectively. That is, where n=18, #i indicates the physical location of the battery block BBᵢ.

The shaded grid in the layout 1100 represents that the battery block corresponding to the grid is an abnormal battery block identified as having thermal runaway hazard. In FIG. 11, because two grids #9, #14 are shaded, those skilled in the art will readily understand a situation in which two battery blocks BB_{9,} BB₁₄ are each identified as an abnormal battery block_{.}

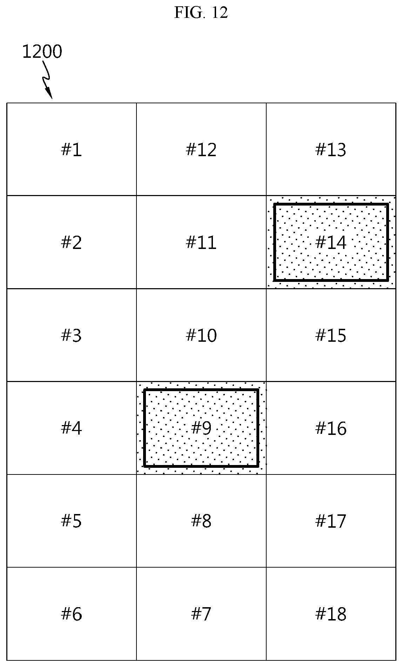

A layout 1200 of FIG. 12 shows the result of grouping when the usage intensity of the battery pack 10 is more than the first intensity in the situation condition shown in FIG. 11. In FIG. 12, two grids #9, #14 marked with the thick solid lines represent abnormal battery blocks BB_{9,} BB₁₄ classified into the first group, and each of the other grids represents each battery block classified into the second group. That is, when the usage intensity of the battery pack 10 is more than the first intensity, the control unit 130 may classify each abnormal battery block into the first group and each remaining battery block into the second group. In this case, sixteen battery blocks BB₁~BB_{8,} BB₁₀~BB_{13,} BB₁₅~BB₁₈ may be electrically connected to the charging/discharging terminals P1, P2 by the switching unit 120, and two battery blocks BB_{9,} BB₁₄ may be electrically separated from the charging/discharging terminals P1, P2 by the switching unit 120.

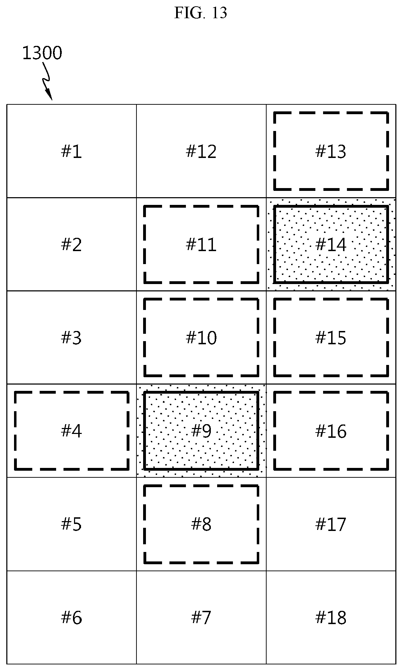

A layout 1300 of FIG. 13 shows the result of grouping when the usage intensity of the battery pack 10 is equal to or less than the first intensity and more than the second intensity in the situation condition shown in FIG. 11. Referring to FIG. 13, in the same way as FIG. 12, two grids #9, #14 are marked with the thick solid lines, but as opposed to the layout 1200 of FIG. 12, seven grids #4, #8, #10, #11 #13, #15, #16 are marked with the thick dotted lines. The grids marked with the thick dotted lines represent that the battery blocks corresponding to the grids are adjacent battery blocks and classified into the first group. Accordingly, it may be seen that the first group shown in the layout 1300 of FIG. 13 is expanded compared to the first group shown in the layout 1200 of FIG. 12. Four grids #4, #8, #10, #16 correspond to adjacent battery blocks BB_{4,} BB_{8,} BB_{10,} BB₁₆ of the abnormal battery block BB₉, and the remaining three grids #11, #13, #15 correspond to adjacent battery blocks BB_{11,} BB_{13,} BB₁₅ of the abnormal battery block BB₁₄. In this case, nine battery blocks BB₁~ BB_{3,} BB₅~BB_{7,} BB_{12,} BB₁₇~BB₁₈ are not only electrically connected in series (or in parallel) by the switching unit 120, but also electrically connected between the charging/discharging terminals P1, P2, while the remaining nine battery blocks BB_{4,} BB₈~BB_{11,} BB₁₃~BB₁₆ may be electrically separated from the charging/discharging terminals P1, P2 by the switching unit 120.

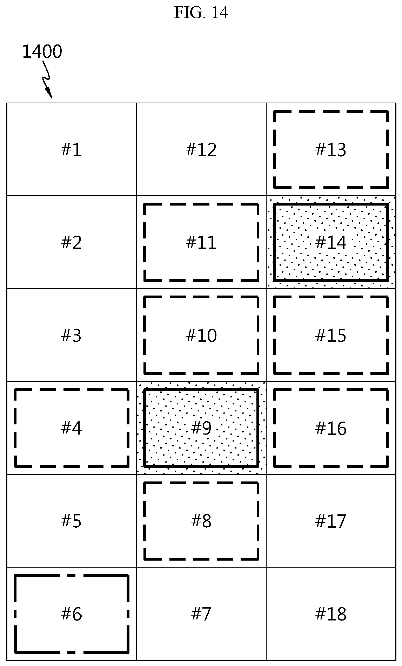

A layout 1400 of FIG. 14 shows the result of grouping when the usage intensity of the battery pack 10 is equal to or less than the second intensity in the situation condition shown in FIG. 11. Referring to FIG. 14, in the same way as FIG. 13, nine grids #4, #8~#11, #13~#16 are marked with the thick solid or dotted lines, but as opposed to the layout 1300 of FIG. 13, grid #6 is additionally marked with the thick dot-and-dash line.

The grid #6 represents the physical location of the degraded battery block BB₆. The degraded battery block BB₆ is not adjacent to two abnormal battery blocks BB₉, BB₁₄ corresponding to two grids #9, #14, but corresponds to a battery block having SOH less than the threshold value. In this case, eight battery blocks BB₁~BB_{3,} BB_{5,} BB_{7,} BB_{12,} BB₁₇~BB₁₈ may be connected in series (or in parallel) by the switching unit 120 and electrically connected between the charging/discharging terminals P1, P2, while ten battery blocks BB_{4,} BB_{6,} BB₈~BB_{11,} BB₁₃~BB₁₆ may be electrically separated from the charging/discharging terminals P1, P2 by the switching unit 120. For reference, in FIG. 14, the SOH of only the battery block BB₆ of the plurality of battery blocks BB₁~BB_{N} is less than the threshold value, but when the number of degraded battery blocks is two or more, all of them may be classified into the first group.

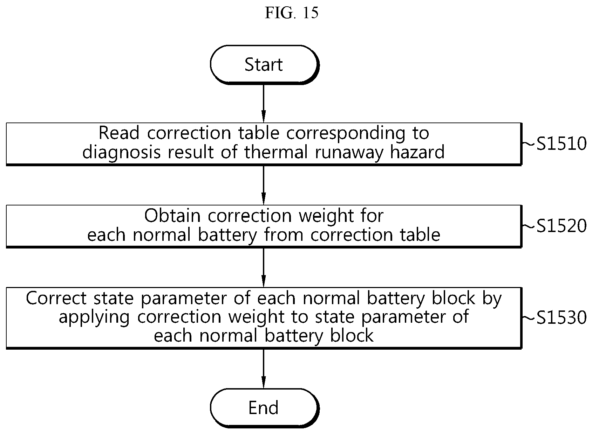

FIG. 15 is a flowchart referenced in briefly describing an example of a set of routines that may be included in the step S820 of FIG. 8, and FIGS. 16 and 17 show exemplary data tables referenced in describing the method of FIG. 15.

Referring to FIG. 15, in step S1510, the control unit 130 reads a correction table corresponding to the diagnosis result of thermal runaway hazard of each of the plurality of battery blocks BB₁~BB_{N} from the memory device. The memory device may pre-store a plurality of correction tables. Specifically, the memory device may store a plurality of correction tables (a set of data tables) corresponding respectively to situations in which the number of abnormal battery blocks among the plurality of battery blocks BB₁~BB_{N} is one to (N-1). For reference, the total number of correction tables associated respectively with possible abnormal situations of the plurality of battery blocks BB₁~BB_{N} may be given by the following Equation. <Equation> ${N}_{DT} = {\sum }_{m = 1}^{N - 1} \frac{N !}{\left(N-m\right) ! m !}$

In the above Equation, N_{DT} may denote the total number of correction tables.

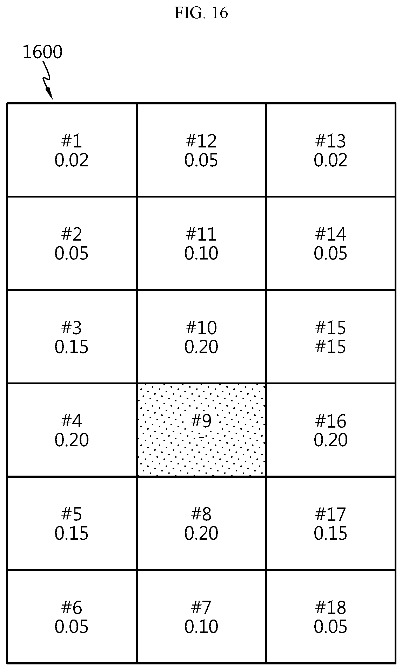

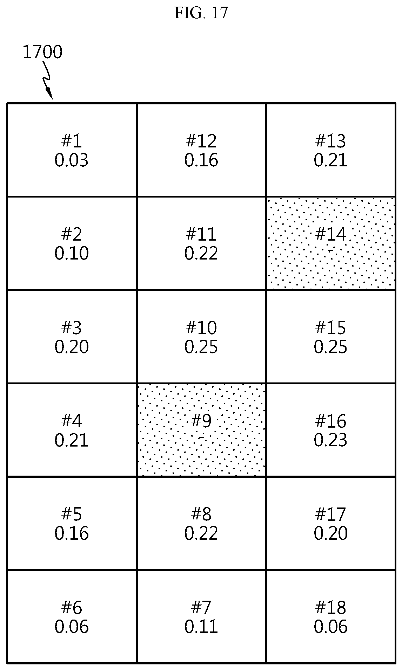

FIGS. 16 and 17 show two correction tables 1600, 1700 corresponding to two different diagnostic results. To help understanding, the two correction tables 1600, 1700 are shown in a 6X3 matrix, like the layout 1100 shown in FIG. 11.

The correction table 1600 of FIG. 16 corresponds to a situation where only the battery block BB₉ is identified as an abnormal battery block. Those skilled in the art will readily understand that when only the other battery block than the battery block BB₉ is identified as an abnormal battery block, the other correction table than the correction table 1600 may be read from the memory device.

The correction table 1700 of FIG. 17 corresponds to a situation where two battery blocks BB_{9,} BB₁₄ are identified as abnormal battery blocks. Likewise, those skilled in the art will readily understand that when at least one of the two battery blocks BB₉, BB₁₄ as an abnormal battery block is replaced with another battery block, the other correction table than the correction table 1700 may be read from the memory device.

Each correction table may record a predetermined correction weight indicating the influence of temperature of abnormal battery block(s) on each remaining battery block excluding the abnormal battery block(s).

In step S1520, the control unit 130 obtains the correction weight for each normal battery block from the correction table that has been read in the step S1510.

Referring to FIG. 16, a larger correction weight is assigned to an area closer to the abnormal battery block BB₉, and in contrast, a smaller correction weight is assigned to an area farther from the battery block BB₉. For example, in the correction table 1600, 0.20 is set as the correction weight for a battery block (for example, BB₈) immediately adjacent to the battery block BB₉, and 0.02 that is smaller than 0.20 is set as the correction weight for a battery block (for example, BB₁) located far away.

Referring to FIG. 17, 0.25 that is larger than 0.20 in the correction table 1600 is assigned as the correction weight to a battery block (for example, BB₁₀) located between the two abnormal battery blocks BB_{9,} BB₁₄. In addition, on the basis of the same grid, the value in the correction table 1700 is larger than the value in the correction table 1600, which can be regarded as reflecting the tendency for the thermal hazards of adjacent battery blocks to increase because there is one more abnormal battery block.

In step S1530, the control unit 130 corrects the state parameter of each normal battery block by applying the correction weight of each normal battery block to the state parameter of the normal battery block.

Assume that the block temperature is used as the state parameter, and two battery blocks BB_{9,} BB₁₄ are abnormal battery blocks as shown in FIG. 11. When the block temperature of the battery block BB₁₀ is 45°C, the correction weight of 0.25 obtained from the correction table 1700 may be applied to 45°C, and 10°C may be calculated as the amount of correction for the battery block BB₁₀. Accordingly, the state parameter of the battery block BB₁₀ may be 45°C plus the amount of correction of 10°C. That is, the corrected state parameter of the battery block BB₁₀ may be 55°C. The state parameter of each remaining battery block may be corrected in the same way.

When the corrected state parameter of the normal battery block is outside of the reference range or larger than the reference value, the control unit 130 may additionally classify the normal battery block into the first group. For example, when the reference value used to identify thermal runaway hazards is 50°C, the two battery blocks BB₉ and BB₁₄ as well as the normal battery block BB₁₀ may be classified into the first group.

Another embodiment of the present disclosure may provide a computer-readable medium having recorded thereon a program for causing a computer to perform the above-described embodiments.

The program may be implemented by hardware components, software components, and/or a combination thereof. The program may be executed by all systems capable of executing computer-readable instructions.

The software may include computer programs, code, instructions or a combination thereof, and may configure a processing device to operate as desired or command the processing device independently or collectively.

The software may be implemented as a computer program including instructions stored on computer-readable storage media. The computer-readable storage media include, for example, magnetic recording media (for example, read-only memory (ROM), random-access memory (RAM), floppy disk, hard disk) and optical reader media (for example, CD-ROM, Digital Versatile Disc (DVD). The computer-readable storage medium may be distributed across computer systems connected via a network to store and execute the computer-readable code in a distributed manner. The recording medium may be read by the computer (at least one processor), stored in the memory (at least one memory device) and executed by the computer (at least one processor).

The computer-readable medium may be provided in the form of a non-transitory recording medium. Here, the 'non-transitory storage medium' refers to a tangible device and does not include a signal (for example, electromagnetic waves), and this term encompasses semi-permanent data storage on the recording medium and temporary data storage. For example, the 'non-transitory storage medium' may include a buffer in which data is temporarily stored.

Additionally, the program may be provided as a computer program product. The computer program product may be a product that is transacted between a seller and a buyer.

The computer program product may include a software program, and a computer-readable recording medium on which the software program is stored. For example, the computer program product may include a product in the form of a software program (for example, a downloadable application) distributed electronically through an electronic device manufacturer or an electronic market. For electronic distribution, at least a part of the software program may be stored on the recording medium or temporarily created. In this case, the recording medium may be a recording medium of the electronic device manufacturer's server, the electronic market's server or an intermediary server that temporarily stores the software program.

The embodiments of the present disclosure described hereinabove are not realized only through the apparatus and method, and may be implemented through the program that performs the function corresponding to the exemplary configuration of the present disclosure or the recording medium having the program recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art to make various modifications and changes within the scope of the technical aspects of the present disclosure and the appended claims and their equivalents.

Additionally, as many substitutions, modifications and changes may be made to the present disclosure by those skilled in the art without departing from the technical aspects of the present disclosure, the present disclosure is not limited by the above-described embodiments and the accompanying drawings, and some or all of the embodiments may be selectively combined to allow various modifications.

## Claims

1. A battery management system comprising:
a sensing unit configured to generate battery monitoring information indicating a state of each of a plurality of battery blocks;
a switching unit configured to change an electrical connection state between the plurality of battery blocks; and
a control unit configured to control the switching unit based on the battery monitoring information.

2. The battery management system according to claim 1,
wherein the control unit is configured to:
diagnose a thermal runaway hazard of each of the plurality of battery blocks based on the battery monitoring information, and
control the switching unit according to a result of the thermal runaway hazard diagnosis.

3. The battery management system according to claim 2,
wherein the control unit is configured to:
classify each of the plurality of battery blocks into a first group or a second group based on the diagnosis result.

4. The battery management system according to claim 3,
wherein the control unit is configured to:
control the switching unit to electrically separate each battery block in the first group from each battery block in the second group.

5. The battery management system according to claim 3,
wherein the switching unit is configured to:
electrically separate each battery block in the first group from charging/discharging terminals, and
electrically connect each battery block in the second group to the charging/discharging terminals.

6. The battery management system according to claim 3,
wherein the control unit is configured to:
differentially change a grouping criterion for the plurality of battery blocks according to a usage intensity of the battery pack.

7. The battery management system according to claim 6,
wherein the control unit is configured to:
classify, into the first group, each abnormal battery block, which is a battery block having the thermal runaway hazard among the plurality of battery blocks, when the usage intensity of the battery pack is equal to or more than an upper limit of a predetermined intensity range.

8. The battery management system according to claim 6,
wherein the control unit is configured to:
classify, into the first group, each adjacent battery block, which is a battery block adjacent to an abnormal battery block among the plurality of battery blocks when the usage intensity of the battery pack is within a predetermined intensity range.

9. The battery management system according to claim 6,
wherein the control unit is configured to:
classify, into the first group, each degraded battery block, which is a battery block having a state of health (SOH) less than a threshold value among the plurality of battery blocks, when the usage intensity of the battery pack is equal to or less than a lower limit of a predetermined intensity range.

10. A battery pack comprising the battery management system according to any one of claims 1 to 9.

11. An electric vehicle comprising the battery pack according to claim 10.

12. A battery management method comprising:
obtaining battery monitoring information indicating a state of each of a plurality of battery blocks; and
controlling a switching unit to change an electrical connection path between the plurality of battery blocks based on the battery monitoring information.

13. The battery management method according to claim 12,
wherein controlling the switching unit comprises:
diagnosing a thermal runaway hazard of each of the plurality of battery blocks based on the battery monitoring information; and
controlling the switching unit according to a result of the thermal runaway hazard diagnosis.

14. The battery management method according to claim 13,
wherein controlling the switching unit further comprises:
classifying each of the plurality of battery blocks into a first group or a second group based on the diagnosis result.

15. The battery management method according to claim 14,
wherein controlling the switching unit further comprises:
controlling the switching unit to electrically separate each battery block in the first group from each battery block in the second group.

16. A computer-readable medium having recorded thereon a program for causing a computer to perform the battery management method according to any one of claims 12 to 15.
